# EUROPEAN PATENT APPLICATION

(11) **EP 4 596 798 A1**
(43) Date of publication of application: **06.08.2025**
(21) Application number: 23871789.6
(22) Date of filing: 06.09.2023
(51) Int. Cl.: E02F 9/00, E02F 9/20, H02J 7/00, H02J 7/34, B60L 50/60, B60L 58/10, B60L 53/14

(54) **WORK MACHINE**

(30) Priority: 28.09.2022 JP 2022155104
(71) Applicant: Hitachi Construction Machinery Co., Ltd., Tokyo 110-0015 (JP)
(72) Inventor: TANIGAKI, Kenta, Tsuchiura-shi, Ibaraki 300-0013 (JP); TAKEUCHI, Ken, Tsuchiura-shi, Ibaraki 300-0013 (JP)
(74) Representative: MERH-IP Matias Erny Reichl Hoffmann Patentanwälte PartG mbB
(86) International application number: PCT/JP2023/032567
(87) International publication number: WO 2024/070549

(57) **Abstract**

Provided is an electrically operated work machine excellent in operability without requiring an operator to consciously switch an operation mode. An electrically operated work machine powered by an electric power supplied from an external power source includes an electric motor, an ignition switch, a gate lock lever, and a controller. The electric motor drives a hydraulic pump. The hydraulic pump supplies a hydraulic oil to a hydraulic actuator. The ignition switch allows or stops an electric power supply to the electric motor. The gate lock lever allows or stops the supply of the hydraulic oil to the hydraulic actuator. The controller controls an operation of the work machine. The controller switches an operation mode of the work machine based on a state of the ignition switch, a state of the gate lock lever, and a state of the electric power supply from the external power source.

## Description

### Technical Field

The present invention relates to an electrically operated work machine.

### Background Art

There has been known an electrically operated work machine that uses a commercial external power source as an electric power supply source. This type of work machines are often operable in a plurality of different operation modes corresponding to an electric power supply form from the external power source.

Patent Literature 1 discloses a work vehicle that can be operated while being switched between a drive mode in which an electric motor is driven by a battery charged by an electric power supplied from an external power source or the electric power supplied from the external power source and a charge mode in which the battery is charged by the electric power supplied from the external power source.

### Citation List

### Patent Literature

Patent Literature 1: JP 2008-308881 A

### Summary of Invention

### Technical Problem

However, in the work vehicle disclosed in Patent Literature 1, to switch the operation mode, unless an operator operates a dedicated input device, such as a charge switch, the operation mode cannot be switched, and it is burdensome.

In consideration of the above-described circumstance, it is an object of the present invention to provide an electrically operated work machine excellent in operability without requiring an operator to consciously switch an operation mode.

### Solution to Problem

To solve the above-described problem, a work machine of the present invention is an electrically operated work machine powered by an electric power supplied from an external power source. The work machine includes an electric motor, an ignition switch, a lock device, and a controller. The electric motor drives a hydraulic pump. The hydraulic pump supplies a hydraulic oil to a hydraulic actuator. The ignition switch allows or stops an electric power supply to the electric motor. The lock device allows or stops the supply of the hydraulic oil to the hydraulic actuator. The controller controls an operation of the work machine. The controller switches an operation mode of the work machine based on a state of the ignition switch, a state of the lock device, and a state of the electric power supply from the external power source.

### Advantageous Effects of Invention

The present invention can provide the electrically operated work machine excellent in operability without requiring an operator to consciously switch the operation mode.

### Brief Description of Drawings

Fig. 1 is a side view of a work machine of an embodiment.
Fig. 2 is a block diagram illustrating a configuration of a drive system of the work machine illustrated in Fig. 1.
Fig. 3 is a state transition diagram of an operation mode of the work machine illustrated in Fig. 2.
Fig. 4 is a diagram describing a two-way mode illustrated in Fig. 3.
Fig. 5 is a timing chart illustrating an operation example of the work machine when switching the operation mode illustrated in Fig. 3.
Fig. 6 is a timing chart illustrating another operation example of the work machine when switching the operation mode illustrated in Fig. 3.
Fig. 7 is a diagram describing a modification of an external electric power detecting device.

### Description of Embodiments

The embodiments of the invention will be described below by referring to the drawings. Unless otherwise mentioned, a configuration to which the same reference numeral is given in respective embodiments has a similar function in the respective embodiments, and the description is omitted.

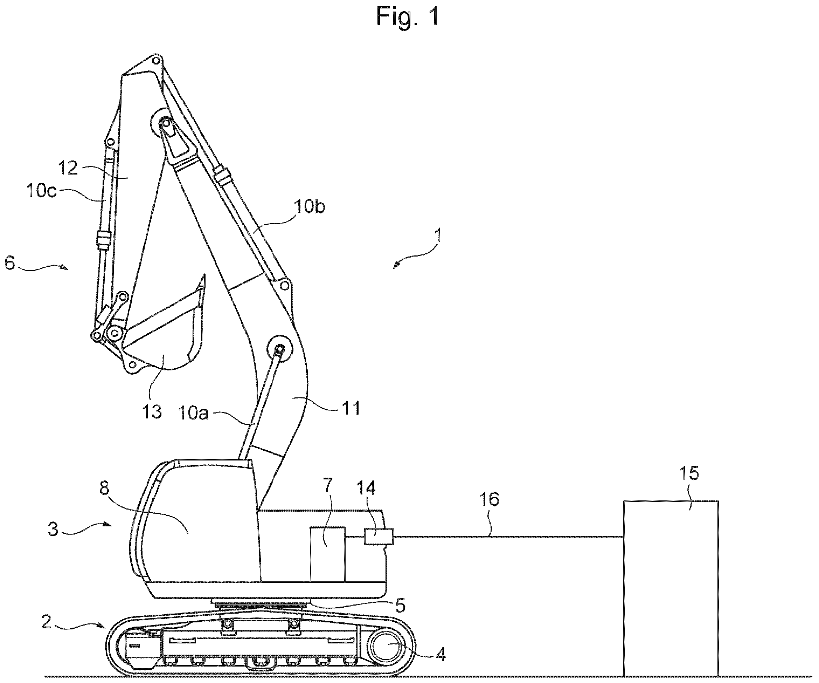

Fig. 1 is a side view of a work machine 1 of the embodiment.

The work machine 1 is an electrically operated work machine powered by an electric power supplied from an external power source 15. Specifically, the work machine 1 is an electrically operated work machine driven by at least one of the external power source 15 or an internal battery 7 charged by the electric power supplied from the external power source 15 as an electric power supply source. The work machine 1 may be an electrically operated construction machine, such as an electric excavator, an electric wheel loader, or an electric crane. In this embodiment, as illustrated in Fig. 1, the work machine 1 is described using an electric excavator as an example.

The work machine 1 illustrated in Fig. 1 is composed of a lower traveling body 2 and an upper turning body 3. The lower traveling body 2 uses a crawler driven by a travel hydraulic motor 4 to cause the work machine 1 to travel. The upper turning body 3 is driven by a hydraulic turning motor 5, and turns with respect to the lower traveling body 2.

The upper turning body 3 includes a front work device 6, a battery 7, a cab 8, an electric power conversion device 14, and the like. The front work device 6 includes a boom 11, an arm 12, a bucket 13, and the like. The boom 11, the arm 12, and the bucket 13 are driven by a boom hydraulic cylinder 10a, an arm hydraulic cylinder 10b, and a bucket hydraulic cylinder 10c provided at the upper turning body 3, respectively, thereby being able to perform an excavation work.

The electric power conversion device 14 is a device that converts an electric power supplied from the external power source 15 via a power feeding cable 16 to an electric power available in the work machine 1. For example, the external power source 15 may be an electric power source connected to a commercial power grid owned by an electric power company, or may be a portable electrical storage device having a large capacity. The external power source 15 of the embodiment may be an electric power supply source that supplies an alternating current power.

In this embodiment, actuators driven by a hydraulic pressure, for example, the boom hydraulic cylinder 10a, the arm hydraulic cylinder 10b, the bucket hydraulic cylinder 10c, the travel hydraulic motor 4, or the hydraulic turning motor 5, are also collectively referred to as a hydraulic actuator 9. The hydraulic actuator 9 is driven by supplying a hydraulic oil from a hydraulic pump 19 provided at the work machine 1.

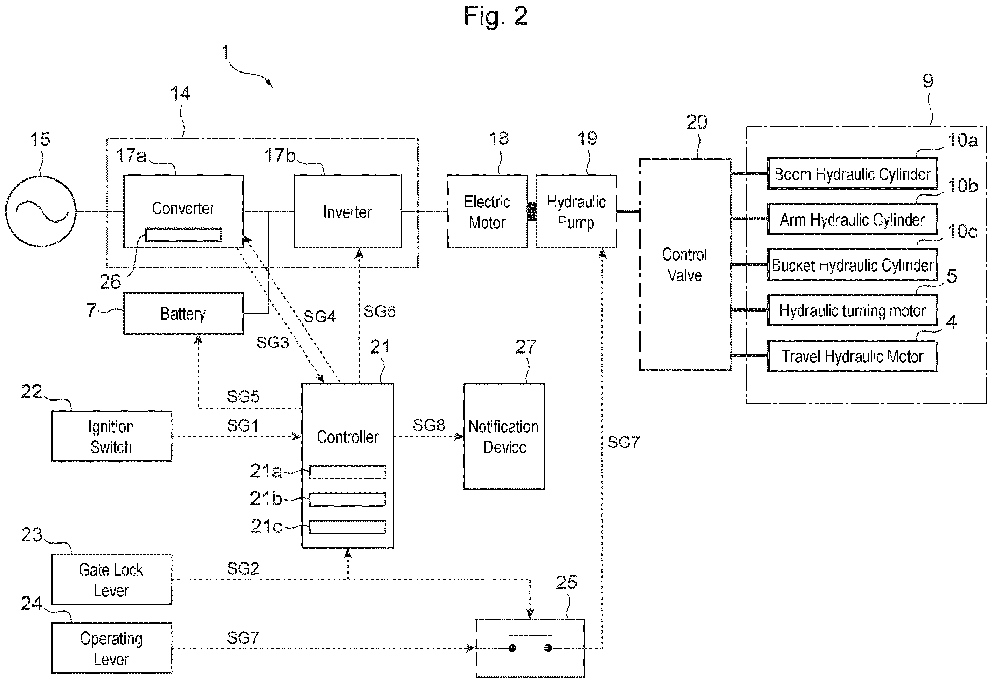

Fig. 2 is a block diagram illustrating a configuration of a drive system of the work machine 1 illustrated in Fig. 1.

The drive system of the work machine 1 includes the battery 7, the electric power conversion device 14, an electric motor 18, the hydraulic pump 19, a control valve 20, the hydraulic actuator 9, a controller 21, an ignition switch 22, a gate lock lever 23 (lock device), an operating lever 24, an operation availability determination device 25, and a notification device 27. The electric power conversion device 14 includes a converter 17a and an inverter 17b.

The battery 7 is, for example, a secondary battery, such as a lithium-ion battery. The battery 7 is charged by an electric power supplied from the external power source 15 and converted by the converter 17a. The battery 7 supplies the charged electric power to the electric motor 18 via the inverter 17b. The battery 7 includes a relay. The relay built in the battery 7 is ON/OFF controlled by an electric power supply availability signal SG5 from a control section 21a of the controller 21. This allows or stops the electric power supply from the battery 7 to the electric motor 18.

The converter 17a converts the alternating current power supplied from the external power source 15 into a direct current power, and supplies it to the battery 7 and the inverter 17b. The converter 17a includes an external electric power detecting device 26 that detects the electric power supply from the external power source 15. The external electric power detecting device 26 includes, for example, a sensor (for example, a voltage sensor) that detects the electric power supplied from the external power source 15. When detecting the electric power supply from the external power source 15, the external electric power detecting device 26 transmits an external electric power detection signal SG3 to the controller 21. The converter 17a includes a relay. The relay built in the converter 17a is ON/OFF controlled by an electric power supply availability signal SG4 from the control section 21a of the controller 21. This allows or stops the electric power supply from the converter 17a to the battery 7 and the inverter 17b.

The inverter 17b converts the direct current power supplied from the converter 17a or the battery 7 into an alternating current power, and supplies it to the electric motor 18. At this time, the inverter 17b controls the alternating current power corresponding to a rotational speed instruction signal from the controller 21. This causes the inverter 17b to drive the electric motor 18 corresponding to the rotational speed instruction signal. The inverter 17b includes a switching element, for example, IGBT. The switching element built in the inverter 17b is ON/OFF controlled by an electric power supply availability signal SG6 from the control section 21a of the controller 21. This allows or stops the electric power supply from the inverter 17b to the electric motor 18.

The electric motor 18 is an AC motor operated by the alternating current power supplied from the inverter 17b. The electric motor 18 includes a rotation shaft coupled to a rotation shaft of the hydraulic pump 19. The electric motor 18 drives the hydraulic pump 19.

The hydraulic pump 19 is driven by the electric motor 18 to supply the hydraulic oil to the hydraulic actuator 9 via the control valve 20. The hydraulic pump 19 supplies the hydraulic oil by a discharge amount corresponding to an operating lever signal SG7 transmitted from the operating lever 24. The control valve 20 distributes the hydraulic oil supplied from the hydraulic pump 19 to the boom hydraulic cylinder 10a, the arm hydraulic cylinder 10b, the bucket hydraulic cylinder 10c, the travel hydraulic motor 4, the hydraulic turning motor 5, and the like.

The ignition switch 22 is a switch operated by an operator to activate or stop (shut down) the operation of the work machine 1. The ignition switch 22 activates or stop the operation of the work machine 1, for example, when the operator turns a key cylinder to ON or OFF. When the operation of the work machine 1 is activated or stopped, the electric power supply to the electric motor 18 is allowed or stopped. That is, the ignition switch 22 allows or stops the electric power supply to the electric motor 18. When operated to the state of allowing the electric power supply to the electric motor 18, the ignition switch 22 transmits an ignition signal SG1 to the controller 21.

The operating lever 24 is a device that is operated by the operator and receives inputs of various kinds of operations for moving the lower traveling body 2, the upper turning body 3, and the front work device 6 at any speeds. When operated by the operator, the operating lever 24 transmits the operating lever signal SG7 to the hydraulic pump 19 via the operation availability determination device 25.

The gate lock lever 23 is an input device that is operated by the operator to switch the operating lever signal SG7 between valid and invalid. When an operation to switch the operating lever signal SG7 to valid is input, the gate lock lever 23 allows the supply of the hydraulic oil to the hydraulic actuator 9, and when an operation to switch the operating lever signal SG7 to invalid is input, the gate lock lever 23 stops the supply of the hydraulic oil to the hydraulic actuator 9. That is, the gate lock lever 23 is a lock device that allows or stops (blocks) the supply of the hydraulic oil to the hydraulic actuator 9. When operated to the state of allowing the supply of the hydraulic oil, the gate lock lever 23 transmits a gate lock signal SG2 to the controller 21 and the operation availability determination device 25.

The gate lock lever 23 may allow or stop the supply of the hydraulic oil to the hydraulic actuator 9 by opening or closing a supply passage of the hydraulic oil from the hydraulic pump 19 to the control valve 20 corresponding to the operation. Alternatively, the gate lock lever 23 may allow or stop the supply of the hydraulic oil to the hydraulic actuator 9 by connecting or blocking a transmission path of the operating lever signal SG7 from the operating lever 24 to the hydraulic pump 19 corresponding to the operation.

The operation availability determination device 25 allows or stops the transmission of the operating lever signal SG7 from the operating lever 24 to the hydraulic pump 19 based on the gate lock signal SG2. When the gate lock signal SG2 is received, the operation availability determination device 25 allows the transmission of the operating lever signal SG7 from the operating lever 24 to the hydraulic pump 19. When the gate lock signal SG2 is not received, the operation availability determination device 25 stops the transmission of the operating lever signal SG7 from the operating lever 24 to the hydraulic pump 19.

The controller 21 includes the control section 21a that controls the operation of the work machine 1 in a plurality of different operation modes. Further, the controller 21 includes an operation switching section 21b that switches the operation mode based on the state of the ignition switch 22, the state of the gate lock lever 23, and the state of the electric power supply from the external power source 15. Further, the controller 21 includes a notification section 21c that causes the notification device 27 to make a notification of a warning.

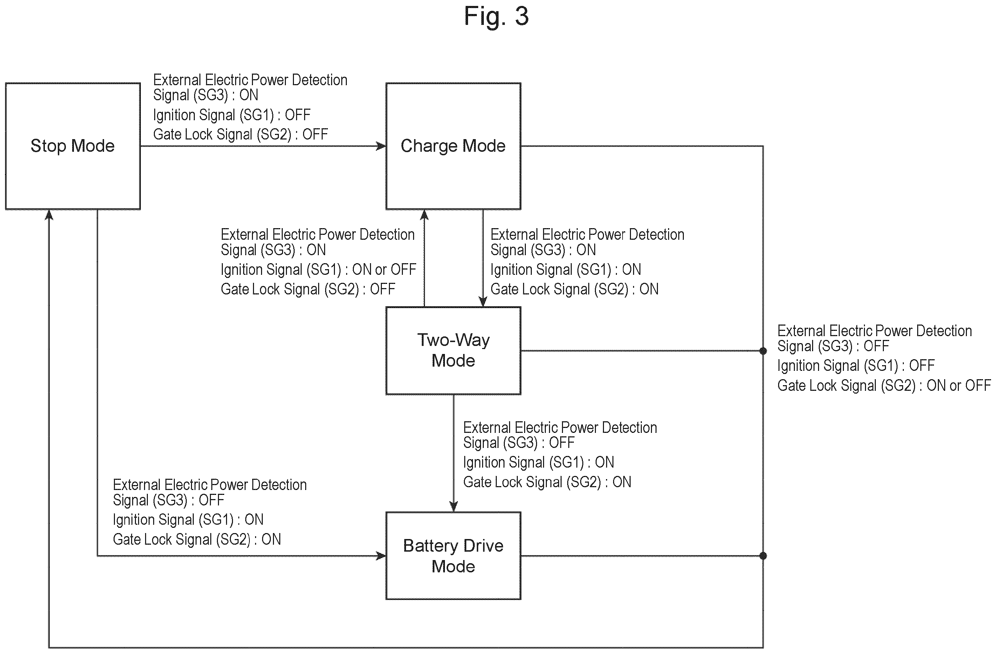

Specifically, the operation switching section 21b of the controller 21 switches the operation mode based on a reception status of the ignition signal SG1, the gate lock signal SG2, and the external electric power detection signal SG3. The control section 21a of the controller 21 can control the operation of the work machine 1 to the operation corresponding to the operation mode by transmitting the electric power supply availability signals SG4 to SG6 to the converter 17a, the battery 7, and the inverter 17b, respectively. The plurality of operation modes of the work machine 1 are described later in detail using Fig. 3. The notification section 21c of the controller 21 transmits a notification control signal SG8 to the notification device 27 when the operation mode is switched, thereby causing the notification device 27 to make the notification of the warning.

The notification device 27 notifies the operator in the cab 8, workers around the work machine 1, and the like of the warning based on the notification control signal SG8 from the notification section 21c of the controller 21. The notification device 27 emits a sound to the operator and the nearby workers as the warning, and indicates a text, a graphic, and the like on a display in the cab 8.

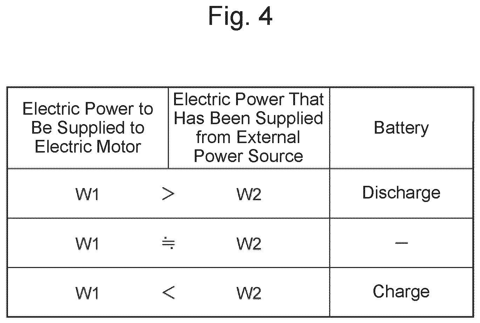

Fig. 3 is a state transition diagram of the operation mode of the work machine 1 illustrated in Fig. 2. Fig. 4 is a diagram describing a two-way mode illustrated in Fig. 3.

A plurality of the operation modes include a stop mode, a charge mode, a battery drive mode, and the two-way mode. The stop mode is an operation mode in which all the electric power supply is stopped. In the stop mode, the electric power supply from the external power source 15 and the battery 7 to the electric motor 18 is stopped, and the electric power supply from the external power source 15 to the battery 7 is also stopped. The charge mode is an operation mode in which the electric power is supplied from the external power source 15 to the battery 7 in the state where the supply of the hydraulic oil to the hydraulic actuator 9 is stopped. The battery drive mode is an operation mode in which the electric power is supplied from the battery 7 to the electric motor 18 in the state where the electric power supply from the external power source 15 to the electric motor 18 is stopped. The two-way mode is an operation mode in which the electric power is supplied from the external power source 15 to the electric motor 18, or the electric power is supplied from the external power source 15 and the battery 7 to the electric motor 18.

In the two-way mode, as illustrated in Fig. 4, the electric power supply configuration to the electric motor 18 differs corresponding to a magnitude relation between an electric power W1 to be supplied to the electric motor 18 and an electric power W2 that has been supplied from the external power source 15. The controller 21 charges the battery 7 while preferentially supplying the electric power from the external power source 15 over the electric power from the battery 7 to the electric motor 18.

Specifically, when the electric power W1 is greater than the electric power W2 in the two-way mode, the controller 21 not only supplies the electric power W2 that has been supplied from the external power source 15 to the electric motor 18, but also supplies the electric power to the electric motor 18 by discharging the battery 7 to compensate a shortage of the electric power (W1 - W2). When the electric power W1 is approximately equal to the electric power W2 in the two-way mode, the controller 21 supplies the electric power W2 that has been supplied from the external power source 15 to the electric motor 18. The battery 7 is neither discharged nor charged. When the electric power W1 is smaller than the electric power W2 in the two-way mode, the controller 21 not only supplies the electric power W2 that has been supplied from the external power source 15 to the electric motor 18, but also supplies an excess of the electric power (W2 - W1) to the battery 7 to charge the battery 7. Thus, in the work machine 1, even when the electric power W2 that has been supplied from the external power source 15 is insufficient, the operation of the work machine 1 can be continued, and the electric power supply capacity of the battery 7 as the internal electric power supply source can be ensured. Accordingly, the work machine 1 can improve the capability of continuing the operation regardless of the electric power supply capacity of the external power source 15.

The operation switching section 21b of the controller 21 switches the operation mode to the charge mode, the battery drive mode, the two-way mode, or the stop mode based on the reception status of the ignition signal SG1, the gate lock signal SG2, and the external electric power detection signal SG3. In Fig. 3, cases where the controller 21 has received the signals SG1 to SG3 are indicated as ON, and cases where the controller 21 has not received the signals SG1 to SG3 are indicated as OFF.

In the stop mode, the ignition signal SG1 is OFF, the gate lock signal SG2 is OFF, and the external electric power detection signal SG3 is OFF. In the stop mode, when the external electric power detection signal SG3 turns ON in the state where the ignition signal SG1 is OFF, the operation switching section 21b of the controller 21 performs switching to the charge mode. In the stop mode, when the ignition signal SG1 turns ON, the operation switching section 21b of the controller 21 activates the work machine 1, and when the gate lock signal SG2 turns ON, the operation switching section 21b of the controller 21 performs switching to the battery drive mode.

In the charge mode, the ignition signal SG1 is ON or OFF, the gate lock signal SG2 is OFF, and the external electric power detection signal SG3 is ON. In the charge mode, when the ignition signal SG1 turns ON and the gate lock signal SG2 turns ON in the state where the external electric power detection signal SG3 is ON, the operation switching section 21b of the controller 21 performs switching to the two-way mode. That is, in the charge mode, when the ignition switch 22 is turned to the state of allowing the electric power supply to the electric motor 18 and the gate lock lever 23 is turned to the state of allowing the supply of the hydraulic oil in the state where the external electric power detecting device 26 has detected the electric power supply from the external power source 15, the operation switching section 21b of the controller 21 performs switching to the two-way mode. In the charge mode, when the external electric power detection signal SG3 turns OFF in the state where the ignition signal SG1 is OFF, the operation switching section 21b of the controller 21 performs switching to the stop mode regardless of the gate lock signal SG2.

In the two-way mode, the ignition signal SG1 is ON the gate lock signal SG2 is ON, and the external electric power detection signal SG3 is ON. In the two-way mode, when the gate lock signal SG2 turns OFF in the state where the external electric power detection signal SG3 is ON, the operation switching section 21b of the controller 21 performs switching to the charge mode regardless of the ignition signal SG1. That is, in the two-way mode, when the gate lock lever 23 is turned to the state of stopping the supply of the hydraulic oil in the state where the external electric power detecting device 26 has detected the electric power supply from the external power source 15, the operation switching section 21b of the controller 21 performs switching to the charge mode. In the two-way mode, when the external electric power detection signal SG3 turns OFF in the state where the ignition signal SG1 is ON and the gate lock signal SG2 is ON, the operation switching section 21b of the controller 21 performs switching to the battery drive mode.
That is, for the operation switching section 21b of the controller 21, in the two-way mode, when the external electric power detecting device 26 is turned to the state of not detecting the electric power supply from the external power source 15 in the state where the ignition switch 22 allows the electric power supply to the electric motor 18 and the gate lock lever 23 allows the supply of the hydraulic oil, the operation switching section 21b of the controller 21 performs switching to the battery drive mode. In the two-way mode, when the ignition signal SG1 turns OFF and the external electric power detection signal SG3 turns OFF, the operation switching section 21b of the controller 21 performs switching to the stop mode regardless of the gate lock signal SG2.

In the battery drive mode, the ignition signal SG1 is ON, the gate lock signal SG2 is ON, and the external electric power detection signal SG3 is OFF. In the battery drive mode, when the ignition signal SG1 turns OFF in the state where the external electric power detection signal SG3 is OFF, the operation switching section 21b of the controller 21 performs switching to the stop mode regardless of the gate lock signal SG2.

The notification section 21c of the controller 21 causes the notification device 27 to make the notification of the warning when the switching from the stop mode to the charge mode is performed and when the switching from the charge mode to the two-way mode is performed. Further, when the switching from the two-way mode to the battery drive mode is performed, the notification section 21c of the controller 21 causes the notification device 27 to make the notification of the warning in a notification manner different from a notification manner of the warning notified at the switching from the stop mode to the charge mode and at the switching from the charge mode to the two-way mode is performed.

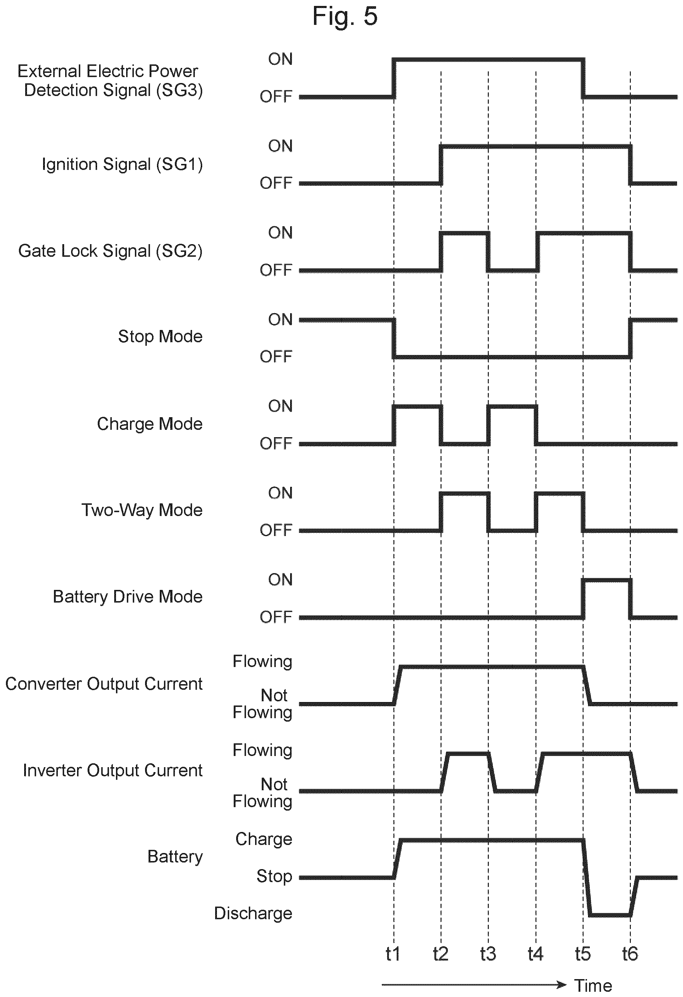

Fig. 5 is a timing chart illustrating an operation example of the work machine when switching the operation mode illustrated in Fig. 3. Fig. 5 illustrates the operation example of the work machine 1 in which the operation mode is switched from the stop mode sequentially to the charge mode, the two-way mode, and the battery drive mode, and then switched to the stop mode.

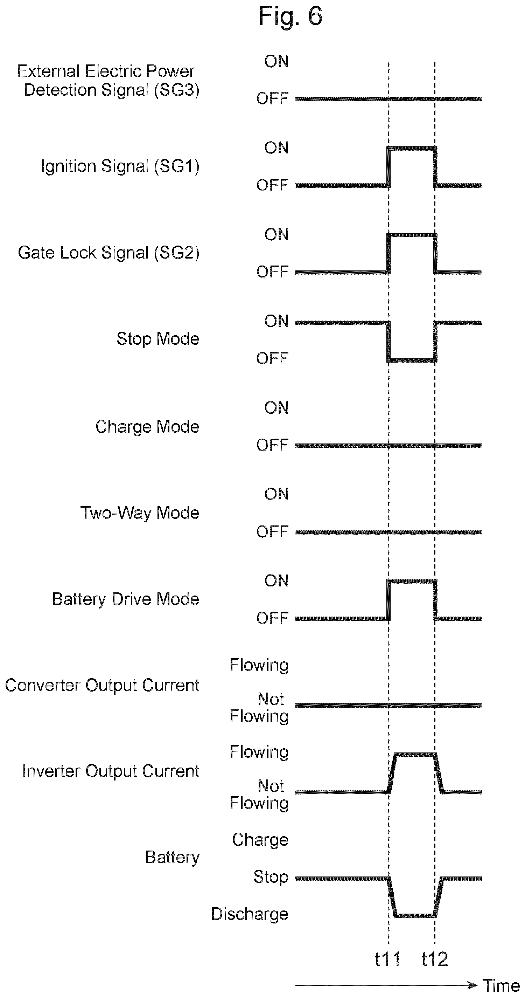

In Fig. 5 and Fig. 6, a converter output current means a current supplied from the converter 17a to each device (at least one of the battery 7 or the inverter 17b). An inverter output current means a current supplied from the inverter 17b to the electric motor 18.

At a time t1, when the operator connects the converter 17a of the work machine 1 to the external power source 15 via the power feeding cable 16, and the external electric power detection signal SG3 turns ON, the controller 21 switches the operation mode from the stop mode to the charge mode. By switching to the charge mode, the converter output current flows, and the electric power is supplied to the battery 7 to charge the battery 7.

At a time t2, when the operator operates the ignition switch 22 to turn ON the ignition signal SG1, and operates the gate lock lever 23 to turn ON the gate lock signal SG2, the controller 21 switches the operation mode from the charge mode to the two-way mode. By switching to the two-way mode, the inverter output current flows, and the electric power is supplied to the electric motor 18.

At a time t3, when the operator operates the gate lock lever 23 to turn OFF the gate lock signal SG2, the controller 21 switches the operation mode from the two-way mode to the charge mode. By switching to the charge mode, the inverter output current stops flowing, and the electric power supply to the electric motor 18 stops.

At a time t4, when the operator operates the gate lock lever 23 to turn ON the gate lock signal SG2, the controller 21 switches the operation mode from the charge mode to the two-way mode. By switching to the two-way mode, the inverter output current flows, and the electric power is supplied to the electric motor 18.

At a time t5, when the power feeding cable 16 is removed from the external power source 15 or the converter 17a, and the external electric power detection signal SG3 turns OFF, the controller 21 performs switching from the two-way mode to the battery drive mode. By switching to the battery drive mode, the converter output current stops flowing, the battery 7 discharges, and the electric power is supplied to the inverter 17b.

At a time t6, when the operator operates the gate lock lever 23 to turn OFF the gate lock signal SG2, and operates the ignition switch 22 to turn OFF the ignition signal SG1, the controller 21 switches the operation mode from the battery drive mode to the stop mode. By switching to the stop mode, the converter output current and the inverter output current stop flowing, and the charge and discharge of the battery 7 stops.

Fig. 6 is a timing chart illustrating another operation example of the work machine when switching the operation mode illustrated in Fig. 3. Fig. 6 illustrates the operation example of the work machine 1 in which the operation mode is switched from the stop mode to the battery drive mode, and then switched to the stop mode.

At a time t11, when the operator operates the ignition switch 22 to turn ON the ignition signal SG1, and operates the gate lock lever 23 to turn ON the gate lock signal SG2, the controller 21 switches the operation mode from the stop mode to the battery drive mode. By switching to the battery drive mode, the battery 7 discharges, and the electric power is supplied to the inverter 17b. The inverter output current flows, and the electric power is supplied to the electric motor 18.

At a time t12, when the operator operates the gate lock lever 23 to turn OFF the gate lock signal SG2, and operates the ignition switch 22 to turn OFF the ignition signal SG1, the controller 21 switches the operation mode from the battery drive mode to the stop mode. By switching to the stop mode, the converter output current and the inverter output current stop flowing, and the charge and discharge of the battery 7 stops.

As described above, the work machine 1 of the embodiment is an electrically operated work machine powered by the electric power supplied from the external power source 15. The work machine 1 includes the electric motor 18 that drives the hydraulic pump 19, and the hydraulic pump 19 supplies the hydraulic oil to the hydraulic actuator 9. The work machine 1 includes the ignition switch 22 that allows or stops the electric power supply to the electric motor 18, and the gate lock lever 23 as a lock device that allows or stops the supply of the hydraulic oil to the hydraulic actuator 9. The work machine 1 includes the controller 21 that controls the operation of the work machine 1.
The controller 21 switches the operation mode of the work machine 1 based on the state of the ignition switch 22, the state of the gate lock lever 23, and the state of the electric power supply from the external power source 15.

This allows the work machine 1 of the embodiment to automatically switch the operation mode only by operating the ignition switch 22, the gate lock lever 23, and the like standardly provided to the work machine 1 by the operator. That is, the work machine 1 of the embodiment can automatically switch the operation mode without providing a dedicated input device for switching the operation mode and performing the dedicated operation for inputting on the input device by the operator. Therefore, the work machine 1 of the embodiment can eliminate the labor of operating the dedicated input device to switch the operation mode. Accordingly, the embodiment can provide the electrically operated work machine excellent in operability without requiring the operator to consciously switch the operation mode.

Further, the work machine 1 of the embodiment further includes the battery 7 provided inside, and the external electric power detecting device 26 that detects the electric power supply from the external power source 15. The operation mode includes the charge mode in which the electric power is supplied from the external power source 15 to the battery 7 in the state where the supply of the hydraulic oil to the hydraulic actuator 9 is stopped, and the battery drive mode in which the electric power is supplied from the battery 7 to the electric motor 18 in the state where the electric power supply from the external power source 15 to the electric motor 18 is stopped. The operation mode includes the two-way mode in which the electric power is supplied from the external power source 15 to the electric motor 18, or the electric power is supplied from the external power source 15 and the battery 7 to the electric motor 18. The controller 21 switches the operation mode to the charge mode, the battery drive mode, or the two-way mode based on the respective states of the ignition switch 22, the gate lock lever 23, and the external electric power detecting device 26.

This allows the work machine 1 of the embodiment to switch the operation mode to the charge mode, the battery drive mode, or the two-way mode only by operating the ignition switch 22, the gate lock lever 23, and the like standardly provided to the work machine 1 by the operator. Therefore, the work machine 1 of the embodiment can perform switching to the operation mode appropriate for the configuration of the electric power supply from the electric power supply source, which is the battery 7 and the external power source 15, without preparing the dedicated input device and the dedicated operation.

Accordingly, the embodiment can provide the electrically operated work machine further excellent in operability without requiring the operator to consciously switch the operation mode appropriately.

Furthermore, in the work machine 1 of the embodiment, in the charge mode, when the ignition switch 22 is turned to the state of allowing the electric power supply to the electric motor 18 and the gate lock lever 23 is turned to the state of allowing the supply of the hydraulic oil in the state where the external electric power detecting device 26 has detected the electric power supply from the external power source 15, the controller 21 performs switching to the two-way mode. **In** the two-way mode, when the gate lock lever 23 is turned to the state of stopping the supply of the hydraulic oil in the state where the external electric power detecting device 26 has detected the electric power supply from the external power source 15, the controller 21 performs switching to the charge mode.

That is, the work machine 1 of the embodiment can perform switching from the charge mode to the two-way mode only performing the standard operation of the ignition switch 22 and the gate lock lever 23 standardly provided to the work machine 1 by the operator. Furthermore, even when the ignition switch 22 is not operated to the state of stopping the electric power supply to the electric motor 18, the work machine 1 of the embodiment can perform switching from the two-way mode to the charge mode. Therefore, in the work machine 1 of the embodiment, since the switching from the two-way mode to the charge mode can be performed without the transition of the work machine 1 to the operation stop state, the switching from the two-way mode to the charge mode can be quickly performed. Accordingly, the embodiment can provide the electrically operated work machine further excellent in operability without requiring the operator to consciously switch the operation mode quickly.

Furthermore, in the work machine 1 of the embodiment, in the two-way mode, when the external electric power detecting device 26 is turned to the state of not detecting the electric power supply from the external power source 15 in the state where the ignition switch 22 allows the electric power supply to the electric motor 18 and the gate lock lever 23 allows the supply of the hydraulic oil, the controller 21 performs switching to the battery drive mode.

Thus, in the work machine 1 of the embodiment, even when the electric power supply from the external power source 15 unexpectedly stops due to, for example, unexpected disconnection of the power feeding cable 16 or power failure, the operation of the work machine 1 can be continued by switching to the battery drive mode without immediately switching to the stop mode. Therefore, in the work machine 1 of the embodiment, since the work machine 1 can avoid suddenly stopping, occurrence of an accident, such as an over-turning of the work machine 1, can be avoided. Accordingly, the embodiment can provide the electrically operated work machine further excellent in operability without requiring the operator to consciously switch the operation mode safely.

Furthermore, the work machine 1 of the embodiment further includes the notification device 27 that makes the notification of the warning. A plurality of the operation modes further include the stop mode in which all the electric power supply is stopped. The controller 21 causes the notification device 27 to make the notification of the warning when the switching from the stop mode to the charge mode is performed and when the switching from the charge mode to the two-way mode is performed.

Therefore, the work machine 1 of the embodiment can notify the operator and nearby workers of the fact of the transition from the state where the electric power supply to the electric motor 18 is stopped to the state where the electric power supply to the electric motor 18 is allowed, thereby calling an attention. Accordingly, the embodiment can provide the electrically operated work machine further excellent in operability without requiring the operator to consciously switch the operation mode safely.

Furthermore, in the work machine 1 of the embodiment, when the switching from the two-way mode to the battery drive mode is performed, the controller 21 causes the notification device 27 to make the notification of the warning in a notification manner different from a notification manner at the switching from the stop mode to the charge mode and at the switching from the charge mode to the two-way mode.

Therefore, the work machine 1 of the embodiment can notify the operator and nearby workers of the fact of unexpected stop of the electric power supply from the external power source 15, thereby calling an attention. Accordingly, the embodiment can provide the electrically operated work machine further excellent in operability without requiring the operator to consciously switch the operation mode safely.

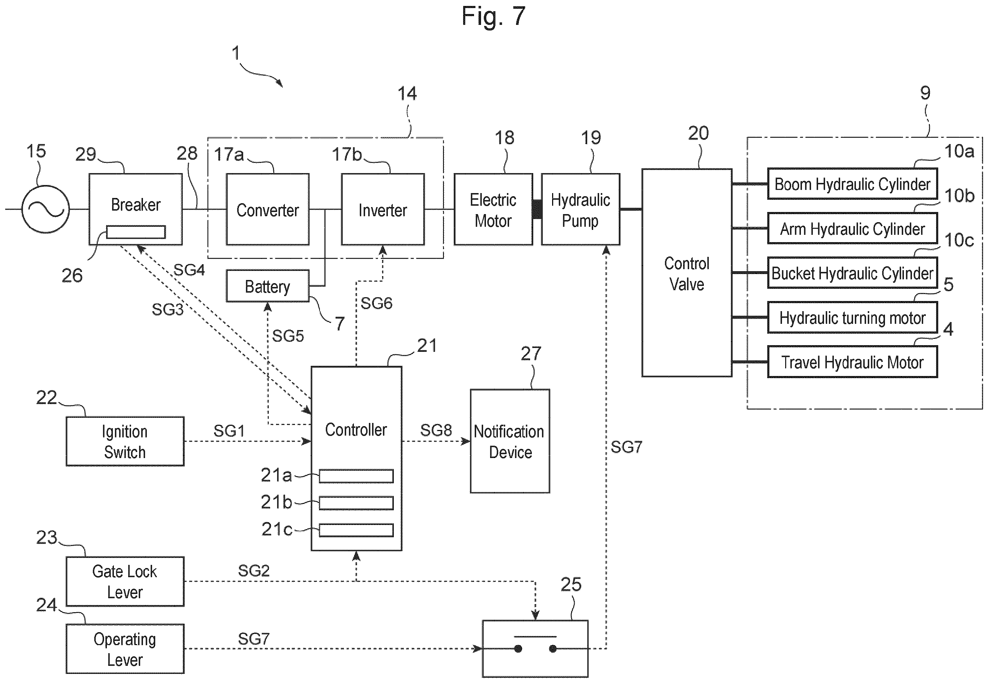

Fig. 7 is a diagram describing a modification of the external electric power detecting device 26.

The external electric power detecting device 26 illustrated in Fig. 2 is configured by a sensor built in the converter 17a, and detects the electric power supplied from the external power source 15. However, the external electric power detecting device 26 is not limited to this.

For example, the external electric power detecting device 26 may detect a connection state of the power feeding cable 16 that connects the external power source 15 to the work machine 1. The external electric power detecting device 26 may transmit the external electric power detection signal SG3 to the controller 21 when the power feeding cable 16 connects the external power source 15 to the work machine 1.

For example, as illustrated in Fig. 7, a breaker 29 is provided on an electric power supply path 28 between the external power source 15 and the battery 7 inside the work machine 1 in some cases. The breaker 29 is provided between the external power source 15 and the converter 17a, and blocks the electric power supply from the external power source 15, for example, when the converter 17a fails. The breaker 29 is operated by the electric power supply availability signal SG4 from the control section 21a of the controller 21. The external electric power detecting device 26 may detect the operating state of the breaker 29. When the breaker 29 does not block the electric power supply from the external power source 15, the external electric power detecting device 26 may transmit the external electric power detection signal SG3 to the controller 21.

The external power source 15 may be an electric power supply source that supplies a direct current power. In this case, the converter 17a is configured by a DC-DC converter, and converts the direct current power supplied from the external power source 15 into a direct current power available in the battery 7 and the inverter 17b.

Thus, the external electric power detecting device 26 of the embodiment can detect the electric power supply from the external power source 15 based on at least one of the detection result of the sensor that detects the electric power supplied from the external power source 15, the connection state of the power feeding cable 16 that connects the external power source 15 to the work machine 1, or the operating state of the breaker 29 provided on the electric power supply path 28 between the external power source 15 and the battery 7.

This allows the external electric power detecting device 26 of the embodiment to detect the electric power supply from various external power sources 15. Therefore, the work machine 1 of the embodiment can switch the operation mode without preparing the dedicated input device and the dedicated operation corresponding to various models of the work machine 1. Accordingly, the embodiment can provide the electrically operated work machine excellent in operability and versatility without requiring the operator to consciously switch the operation mode.

While the embodiments of the present invention are described above in detail, the present invention is not limited to the above-described embodiments, and various changes can be made without departing from the spirit of the present invention described in the claims. In the present invention, a configuration of one embodiment can be added to a configuration of another embodiment, a configuration of one embodiment can be replaced with a configuration of another embodiment, and a part of configurations of one embodiment can be deleted.

### Reference Signs List

- 1: Work machine
- 7: Battery
- 9: Hydraulic actuator
- 15: External power source
- 16: Power feeding cable
- 18: Electric motor
- 19: Hydraulic pump
- 21: Controller
- 22: Ignition switch
- 23: Gate lock lever (lock device)
- 26: External electric power detecting device
- 27: Notification device
- 28: Electric power supply path
- 29: Breaker

## Claims

1. An electrically operated work machine powered by an electric power supplied from an external power source, the work machine comprising:
an electric motor that drives a hydraulic pump, the hydraulic pump supplying a hydraulic oil to a hydraulic actuator;
an ignition switch that allows or stops an electric power supply to the electric motor;
a lock device that allows or stops the supply of the hydraulic oil to the hydraulic actuator; and
a controller that controls an operation of the work machine,
wherein the controller switches an operation mode of the work machine based on a state of the ignition switch, a state of the lock device, and a state of the electric power supply from the external power source.

2. The work machine according to claim 1, further comprising:
a battery provided inside; and
an external electric power detecting device that detects the electric power supply from the external power source,
wherein the operation mode includes:
a charge mode in which the electric power is supplied from the external power source to the battery in a state where the supply of the hydraulic oil to the hydraulic actuator is stopped;
a battery drive mode in which the electric power is supplied from the battery to the electric motor in a state where the electric power supply from the external power source to the electric motor is stopped; and
a two-way mode in which the electric power is supplied from the external power source to the electric motor, or the electric power is supplied from the external power source and the battery to the electric motor,
wherein the controller switches the operation mode to the charge mode, the battery drive mode, or the two-way mode based on respective states of the ignition switch, the lock device, and the external electric power detecting device.

3. The work machine according to claim 2,
wherein the controller performs:
the switching to the two-way mode when in the charge mode, the ignition switch is turned to a state of allowing the electric power supply to the electric motor and the gate lock device is turned to a state of allowing the supply of the hydraulic oil in a state where the external electric power detecting device has detected the electric power supply from the external power source, and
the switching to the charge mode when in the two-way mode, the lock device is turned to a state of stopping the supply of the hydraulic oil in the state where the external electric power detecting device has detected the electric power supply from the external power source.

4. The work machine according to claim 2,
wherein in the two-way mode, when the external electric power detecting device is turned to a state of not detecting the electric power supply from the external power source in a state where the ignition switch allows the electric power supply to the electric motor and the lock device allows the supply of the hydraulic oil, the controller performs the switching to the battery drive mode.

5. The work machine according to claim 2, further comprising
a notification device that makes a notification of a warning,
wherein the operation mode further includes a stop mode in which all the electric power supply is stopped, and
wherein the controller causes the notification device to make the notification of the warning at the switching from the stop mode to the charge mode and at the switching from the charge mode to the two-way mode.

6. The work machine according to claim 5,
wherein at the switching from the two-way mode to the battery drive mode, the controller causes the notification device to make the notification of the warning in a notification manner different from a notification manner at the switching from the stop mode to the charge mode and at the switching from the charge mode to the two-way mode.

7. The work machine according to claim 1, further comprising:
a battery provided inside; and
an external electric power detecting device that detects the electric power supply from the external power source,
wherein the external electric power detecting device detects the electric power supply from the external power source based on at least one of a detection result of a sensor that detects the electric power supplied from the external power source, a connection state of a power feeding cable that connects the external power source to the work machine, or an operating state of a breaker provided on an electric power supply path between the external power source and the battery.
